# FASCICULE DE BREVET EUROPEEN

(11) **EP 1 945 593 B1**
(45) Date de publication et mention de la délivrance du brevet: **09.12.2009**
(21) Numéro de dépôt: 06809584.3
(22) Date de dépôt: 12.10.2006
(51) Int. Cl.: C04B 35/111

(54) **PROCEDE DE FABRICATION D'UN MATERIAU CERAMIQUE POREUX ET MATERIAU AINSI OBTENU**
VERFAHREN ZUR HERSTELLUNG EINES PORÖSEN KERAMIKMATERIALS UND DADURCH ERHALTENES MATERIAL
METHOD FOR PRODUCING A POROUS CERAMIC MATERIAL AND MATERIAL OBTAINED THEREBY

(30) Priorité: 12.10.2005 EP 05109497
(43) Date de publication de la demande: 23.07.2008
(73) Titulaire: Institut National Interuniversitaire des Silicates, Sols et Materiaux (I.N.I.S.Ma), a.s.b.l., 7000 Mons (BE); Centre de Recherche de l'Industrie Belge de la Ceramique (C.R.I.B.C.), 7000 Mons (BE)
(72) Inventeur: AUVRAY, Jean-Michel, B-7000 Mons (BE); TIRLOCQ, Jacques, B-7000 Mons (BE); LARDOT, Véronique, B-7000 Mons (BE); CAMBIER, Francis, B-7000 Mons (BE)
(74) Mandataire: Callewaert, Koen
(86) Numéro de dépôt international: PCT/IB2006/053759
(87) Numéro de publication internationale: WO 2007/043022

(56) Documents cités:
- EP-A- 0 425 139
- WO-A-00/30995
- WO-A-00/34202
- DE-A1- 10 012 501

## Description

La présente invention a pour objet un procédé de fabrication de matériaux réfractaires légers à porosité multimodale. La structure poreuse de tels matériaux obtenus selon l'invention, caractérisée par une répartition homogène des pores et des tailles de pores réglables, leur permet d'être utilisés efficacement pour la filtration. Les caractéristiques mécaniques et thermiques des matériaux réfractaires obtenus selon l'invention, en particulier une bonne résistance à la compression et une faible conductivité thermique, les rendent très attractifs pour une utilisation à haute température pour l'isolation thermique ou le montage de structures.

Les céramiques poreuses sont utilisées dans diverses applications industrielles comme filtres à liquide ou à gaz, comme supports catalytiques ou encore comme isolants thermiques à haute température. Les caractéristiques microstructurales de ces matériaux, en termes de volume poreux et de taille des pores, permettent d'identifier leur domaine d'application. Dès lors, pour les mousses céramiques dont les pores ouverts sont interconnectés, la filtration apparaît la plus adéquate. Lorsque la porosité est fermée avec des tailles de pores micrométriques, ces mousses céramiques seront quant à elles adaptées à l'isolation thermique à haute température.

Les méthodes permettant de générer de la porosité au sein d'un matériau céramique sont nombreuses. Parmi ces méthodes, le frittage partiel permet de retenir la porosité au sein du matériau par le choix et l'ajustement de la composition en matières premières, la température de frittage et les conditions de cuisson. Cette méthode développe généralement des tailles de pores inférieures au micromètre. Une autre méthode consiste à utiliser des additifs (blowing agent) qui avec le traitement thermique se décomposent en libérant des bulles de gaz. Ces matériaux sont caractérisés par une microstructure poreuse hétérogène constituée de pores de taille et de forme aléatoires. De plus, ces matériaux possèdent des propriétés mécaniques relativement faibles qui réduisent alors leur champ d'application.

Le volume poreux peut également être induit par la calcination d'agents combustibles comme des billes de polystyrène, la sciure de bois, des granules d'amidon ou des particules de coke de pétrole qui sont dispersés dans la masse céramique. Ce procédé de « burn-out » est bien répandu dans la fabrication de matériaux réfractaires légers utilisés pour l'isolation thermique. Cette méthode n'est cependant intéressante que pour la fabrication de matériaux dont la porosité atteint au maximum 60%.

Parmi les matériaux poreux de faible densité, on peut également citer ceux dits à « structure ouverte » ou de type « mille-feuilles ». Il s'agit plus particulièrement d'argiles hydratées du groupe des phyllosilicates, comme la vermiculite ou la perlite, qui sous l'action de la chaleur (>600°C) ont la propriété d'augmenter considérablement de volume en emprisonnant de l'air entre leurs particules lamellaire.

Les microporeux sont des matériaux qui répondent également parfaitement aux sollicitations thermiques en réduisant les transferts de chaleur des différents modes de propagation. Ils sont constitués de particules nanométriques et possèdent un volume poreux supérieur à 90%. Leur grande résistance à la propagation de la chaleur s'explique par la taille nanométrique des pores (<100nm) inférieure au trajet moyen des molécules d'air, ce qui diminue fortement le transfert de chaleur par convection. Les caractéristiques de ces deux types de matériaux en font d'excellents candidats à l'isolation thermique. Cependant, la température limite d'utilisation de ces matériaux est relativement faible, inférieure à 1100°C.

D'autres matériaux de faible densité sont obtenus à partir de fibres céramiques. Ces matériaux possèdent des caractéristiques remarquables, en termes de densité, porosité, conductivité thermique, qui en font les meilleurs candidats à l'isolation thermique à haute température (>1600°C). Malheureusement, les fibres céramiques réfractaires sont sujettes à une réglementation qui les classe dans la catégorie 2 des matériaux potentiellement dangereux et cancérigènes. Dès lors; des solutions alternatives restent aujourd'hui à proposer pour pallier ces problèmes de toxicité.

Les mousses céramiques connaissent aujourd'hui un essor considérable du fait de l'étendue des applications envisageables pour ces matériaux. Elles sont largement utilisées pour la filtration des liquides et des gaz, et parfois pour l'isolation thermique à haute température en remplacement des produits fibreux. La méthode la plus classiquement utilisée pour la fabrication de ces mousses consiste à imprégner une mousse polymère, généralement en polyuréthane, par une suspension céramique, à sécher la mousse pour éliminer le solvant, à la traiter thermiquement pour éliminer le polymère, et enfin, à consolider le répliqua céramique par frittage à haute température. Il résulte de cette méthode une céramique à forte porosité ouverte interconnectée avec des tailles de pores généralement supérieures à 100 µm. Une autre méthode de fabrication d'une mousse céramique consiste à incorporer à la suspension céramique une poudre métallique d'aluminium, laquelle, en réagissant avec un composé alcalin tel que la chaux, génère de l'hydrogène qui a pour effet d'expanser le corps cru. Cependant, ces matériaux souffrent d'une mauvaise tenue mécanique avant comme après traitement thermique.

Le procédé de "gelcasting" s'est également développé pour la fabrication des mousses céramiques profitant d'une large gamme de porosité rendue possible. Dans cette technique, une suspension céramique contenant un polymère et un agent réticulant est aérée par agitation mécanique en présence d'un agent moussant. Cette mousse est ensuite consolidée par polymérisation sous des conditions particulières. Dans la demande de brevet US 2005/0200055, l'invention porte sur la fabrication d'une pièce céramique poreuse à partir de la polymérisation d'une mousse céramique préalablement formée par agitation d'une suspension céramique en présence d'un agent moussant, via une résine époxy comme agent principal, et une amine comme agent réticulant. Ce procédé a toutefois l'inconvénient de polymériser la mousse céramique par traitement thermique après qu'elle ait été coulée dans un moule. Dans la demande de brevet US 2005/0207928, à l'inverse de la méthode précédente, la structure céramique est d'abord consolidée par la gélification du polymère, en particulier l'alcool polyvinylique. Le gel ainsi obtenu est ensuite aéré en le faisant mousser par production d'une vapeur résultant de l'ébullition du n-hexane à 80°C. Lorsque la mousse est produite avant l'étape de gélification, elle peut en partie disparaître par coalescence des bulles, et ainsi, des taux de porosité importants sont difficiles à atteindre. Ce procédé possède les désavantages de comporter des étapes de fabrication qui nécessitent de prendre des précautions spéciales, en particulier, anticiper l'effet du moussage dans le moule de forme désirée ou bien rectifier par usinage la masse expansée aux cotes désirées.

A la lecture de ce qui précède, l'art antérieur dans le domaine des matériaux poreux renseigne donc principalement sur les méthodes relatives à la façon de générer de la porosité. Mais à ce jour, peu d'études concernent le contrôle de la taille, de la forme des pores, ainsi que de leur répartition au sein de la microstructure.

Dans le brevet US 3.950.175, la porosité est obtenue après décomposition ou/et transformation thermique de certaines argiles, comme la pyrophillite, de la cyanite ou encore du quartz, qui sont ajoutés au mélange pour former après frittage de la cordiérite poreuse. Les inventeurs se sont attachés à contrôler la distribution en taille des pores en favorisant les pores de diamètre supérieur à 10 micromètres qu'ils ont désignés de « porosité grossière ». Tout en faisant varier la taille des pores avec la nature de l'argile, cette méthode ne permet pas d'atteindre des porosités supérieures à 45% en volume. De plus, la céramique obtenue à base de ces argiles, en particulier la cordiérite, est limitée à des applications à des moyennes températures, inférieures en tout cas à 1350°C.

Dans la demande de brevet US 2002/0043734, on décrit la fabrication d'une céramique poreuse à partir de la décomposition thermique d'un hydroxyde d'aluminium. Les caractéristiques microstructurales et mécaniques d'un tel matériau sont contrôlées à condition de se maintenir à des températures de frittage qui ne permettent pas, ou alors de manière partielle, la transformation de la phase θ-Al₂O₃ vers la phase α-Al₂O₃. A ces fins, les inventeurs utilisent des ajouts de zircone qui retardent cette transformation de phase et qui permettent de maintenir une surface spécifique relativement importante au sein du matériau. La porosité totale atteint au maximum 60%, pour des tailles de pores de 10 et 200 nm et une surface spécifique de 29,53 m²/g. Une variation de ces caractéristiques est observée avec l'accroissement de la température de frittage, au bénéfice de la tenue mécanique de la céramique, mais à l'encontre des propriétés microstructurales recherchées. En outre, le champ d'application d'une telle céramique reste limité à la filtration ou à la catalyse, où les limites de température d'utilisation et les exigences mécaniques sont moins contraignantes.

Le document EP 0425139 décrit un procédé de fabrication d'un matériau céramique réfractaire à porosité dans lequel on mélange en suspension aqueuse de poudres céramiques, un agent dispersant, un agent organique granulaire, en particulier du "styrofoam", comme agent porogène et un agent moussant. Ce mélange est soumis à une agitation mécanique pour obtenir une mousse céramique. Ensuite, cette mousse céramique est stabilisée par l'ajout d'un agent stabilisant et coulée dans un moule. La mousse est soumise à un étuvage afin d'éliminer l'eau présente et subit un traitement à haute température.

Outre les caractéristiques microstructurales généralement recherchées pour une céramique poreuse, l'utilisation de cette dernière ne pourra se faire de manière optimale que si elle possède des propriétés mécaniques acceptables. A la lecture de l'état de l'art dans ce domaine, un compromis entre ces deux critères contradictoires reste encore aujourd'hui à trouver tant la demande en céramiques à très forte porosité (>90%) se fait ressentir. Le contrôle de la microstructure d'un tel produit, en termes de porosité, répartition et tailles des pores, et de ses propriétés mécaniques constituent donc un challenge à relever. On note également, qu'à ce jour, aucune solution n'est pleinement satisfaisante pour une utilisation à haute température, en particulier à une température maximale d'utilisation en continu d'au moins 1300°C. Un produit qui regrouperait les critères susmentionnés allierait alors les caractéristiques et les avantages suivants :
- Une légèreté amenée par un volume poreux élevé, dépassant notamment 80%;
- Une distribution en taille des pores contrôlée;
- Un produit léger possédant une densité inférieure à 1 ;
- Une réfractarité élevée, avec notamment une température limite d'utilisation en continu supérieure à 1300°C ;
- Un pouvoir isolant élevé, avec notamment une conductivité thermique mesurée à 1100°C inférieure à 0.4 W/m.K ;
- Une résistance à l'écrasement à froid suffisante, supérieure notamment à 4 MPa ;
- Une diversité et une facilité de mise en oeuvre par coulage pour des pièces de formes variées ;

La présente invention a donc pour but de remédier aux inconvénients susmentionnés en proposant une méthode de fabrication de matériaux céramiques réfractaires à porosité élevée et de type multimodal et les matériaux ainsi obtenus regroupant au mieux les avantages susmentionnés. L'originalité de l'invention réside dans l'association avantageuse de plusieurs techniques de génération de pores qui seront explicitées ci-après.

Un autre but de la présente invention est de fournir à un matériau céramique élaboré selon ladite méthode de fabrication, les caractéristiques de légèreté nécessaires à certaines applications industrielles.

La méthode de la présente invention permet notamment de fournir un matériau réfractaire à très forte porosité destiné à l'isolation thermique et capable de résister à une température d'utilisation en continu d'au-moins 1500°C.

A cet effet, la présente invention fournit un procédé de fabrication de matériaux réfractaires à porosité élevée et de type multimodal, qui comprend avantageusement les étapes suivantes :
(a) Préparation d'une suspension céramique à partir d'un mélange de poudres céramiques, d'un précurseur inorganique formé par un hydroxyde d'un métal réfractaire, tel que l'hydroxyde d'aluminium, de magnésium of de zirconium, et d'un agent de dispersion de particules céramiques ;
(b) Ajout à ladite suspension d'un agent organique naturel granulaire, lequel agira d'une part, comme liant en rigidifiant la structure et, d'autre part, comme agent porogène ;
(c) Ajout à ladite suspension d'un agent tensio-actif utilisé comme agent moussant et agitation mécanique du mélange de sorte à obtenir une mousse ;
(d) Stabilisation de la mousse céramique par ajout d'un agent stabilisant approprié ;
(e) Coulage en moule de ladite mousse céramique ainsi obtenue ;
(f) Gélification de l'agent organique naturel au sein de cette suspension de sorte à obtenir une masse rigide ;
(g) Traitement thermique par tempérage de la mousse céramique pour éliminer l'eau résiduelle et les fragments de décomposition de l'agent organique naturel, puis traitement à haute température pour réaliser la consolidation de la pièce par frittage des matières céramiques.

Les détails techniques et différents avantages de la présente invention ressortiront de la description donnée, ci-après, à titre d'exemple non limitatif, de quelques formes de réalisation particulières du procédé, selon l'invention, avec références aux dessins annexés.
La figure 1 montre la microstructure de l'article poreux fabriqué selon une forme du procédé explicitée ci-après dans l'exemple 1.
La figure 2 montre la répartition en taille de pores pour l'article poreux fabriqué selon une forme du procédé explicitée dans l'exemple 1.
La figure 3 montre la microstructure de l'article poreux fabriqué selon une forme du procédé explicitée dans l'exemple 2.
La figure 4 montre la répartition en taille de pores pour l'article poreux fabriqué selon une forme du procédé explicitée dans l'exemple 2.
La figure 5 montre les densités des articles fabriqués selon une forme du procédé explicitée dans l'exemple 2 et traités à 110°C et à 1550°C.
La figure 6 montre les porosités apparentes des articles fabriqués selon une forme du procédé explicitée dans l'exemple 2 et traités à 1550°C.
La figure 7 montre la microstructure de l'article fabriqué selon une forme du procédé explicitée dans l'exemple 3.
La figure 8 montre la répartition en taille de pores pour l'article fabriqué selon une forme du procédé explicitée dans l'exemple 3.

Un des avantages de la méthode de fabrication fournie par la présente invention est que l'on procède par des étapes d'élaboration qui sont relativement simples, flexibles, faciles à mettre en oeuvre et applicables à une variété de matières céramiques. Un autre avantage de la présente invention réside dans l'aspect écologique de la méthode de fabrication qui incorpore des sous-produits de l'industrie. De plus, il s'agit d'une méthode de fabrication qui a le mérite d'être rentable du point de vue économique, en comparaison des autres méthodes de production de matériaux poreux.

### Etape (a)

Selon l'invention, ladite suspension céramique préparée à l'étape (a) est obtenue à partir de poudres céramiques qui sont choisies, de manière non limitative, parmi l'alumine, la silice, la magnésie, la zircone, ou encore parmi les aluminosilicates.

Dans un mode préféré de réalisation, ladite poudre céramique est choisie parmi l'alumine et la silice, de préférence l'alumine.

Le diamètre maximum des particules céramiques utilisées dans l'invention n'est pas particulièrement limité, mais ne devrait pas de préférence dépasser 150 micromètres.

D'une manière appropriée et avantageuse, ladite poudre céramique utilisée dans l'invention devrait comporter plusieurs fractions granulométriques bien distinctes.

En effet, en progressant dans la réalisation des objets poreux à partir de ladite poudre céramique, on s'est aperçu que la fraction granulométrique la plus grossière pouvait servir de charge granulaire à la structure céramique, et ainsi ralentir le retrait de la pièce lors du frittage à haute température. De cette façon, il est alors possible de contrôler les dimensions des pièces et le type de microstructure désiré en préservant la porosité.

Dans un mode de réalisation avantageux, la suspension céramique est élaborée à partir d'au moins deux classes granulométriques de ladite poudre céramique, avec un rapport entre la fraction la plus grossière de ladite poudre céramique et la fraction la plus fine qui devrait être compris au moins entre 0,2 et 0,5, de préférence 0,4.

Dans une forme de réalisation très intéressante du procédé, suivant l'invention, la poudre céramique utilisée est une alumine à haute pureté, à plus de 99,7% en masse d'Al₂O₃, et présente sous deux formes A1 et A2 particulièrement intéressantes selon l'invention. La poudre A1 est une alumine réactive qui possède une distribution granulométrique monomodale s'étalant de 0,1 à 4 µm, avec une taille moyenne de grains de 0,4 µm. Sa surface spécifique est de 8 m²/g et sa densité absolue est de 3,98. L'autre forme A2 de l'alumine est une alumine calcinée dont la distribution granulométrique est bimodale s'étalant de 0,2 à 40 µm, avec une taille moyenne des grains de 2,57 µm, une première population centrée sur 0,45 µm et une seconde population centrée sur 4,5 µm. Sa surface spécifique est de 2,54 m²/g et sa densité absolue est de 3,97.

On entend par alumine « réactive », une poudre céramique dont le frittage en une céramique très dense lors d'un traitement thermique résulte de la finesse de ses grains et de la grande surface spécifique qui s'en dégage.

On entend par alumine « calcinée », une poudre céramique plus grossière issue de la décomposition thermique des hydroxydes d'aluminium en l'alumine α-Al₂O₃ lors d'un traitement thermique à 1250°C.

De préférence, un agent dispersant de type polyélectrolyte est utilisé pour la dispersion des particules au sein de la suspension céramique susmentionnée. Il s'agit d'un composé exempt de soude Na₂O et contenant des sels de polyacrylate d'ammonium. Cet agent dispersant procure l'avantage de pouvoir travailler dans une gamme de pH relativement neutre, comprise entre 7 et 9, de préférence 8. De cette façon, un avantage de la présente invention réside dans une défloculation optimale des particules céramiques grâce à cet agent actif sans la nécessité d'ajouter un quelconque acide.

D'une manière intéressante, ladite suspension céramique est mélangée avec une poudre d'hydroxyde d'aluminium particulière à l'invention. Cette poudre d'hydroxyde d'aluminium fournit une matière de base génératrice d'une très fine porosité au sein du produit fini, comme illustré ci-après dans l'exemple 1.

L'hydroxyde d'aluminium utilisé dans la présente invention provient de préférence d'un sous-produit de l'industrie de l'aluminium. Il s'agit ici d'une poudre référencée HA contenant 55% en masse de phase amorphe et 45% en masse de phases cristallisées qui sont la bayerite Al(OH)₃ à 15% en masse et la boehmite γ-AlOOH à 30% en masse. Sa densité absolue est de 2,53 et sa répartition granulométrique est centrée sur 17 µm. La déshydratation de ce composé lors d'un traitement thermique est associée à une perte de masse d'environ 28% à 600°C et à un retrait volumique d'environ 30% qui génère de la porosité.

Cet hydroxyde d'aluminium, spécifique à la présente invention, sert également de liant pour la fabrication du matériau poreux. En effet, en se combinant à l'eau, il se crée des liaisons physico-chimiques associées à la phase amorphe présente dans ce composant qui sont assez fortes pour provoquer le durcissement de la suspension céramique lorsqu'elle est exposée à une température comprise entre 30 et 60°C, de préférence 50°C.

Un aspect innovant de la technologie selon l'invention réside donc dans l'utilisation avantageuse de ce constituant pris à la fois comme liant et comme agent porogène.

De plus, il s'agit d'un déchet de l'industrie dont la réutilisation s"avère avantageuse suivant l'invention et potentiellement intéressante du point de vue économique.

Plus particulièrement, ladite suspension céramique servant à la fabrication du matériau poreux se compose de :
- 62 à 70% en masse de ladite poudre céramique
- 3 à 7% en masse dudit hydroxyde d'aluminium spécifique à la présente invention
- 27 à 31% en masse d'une eau déminéralisée contenant un agent dispersant de type polyélectrolyte dans la proportion 1:100.

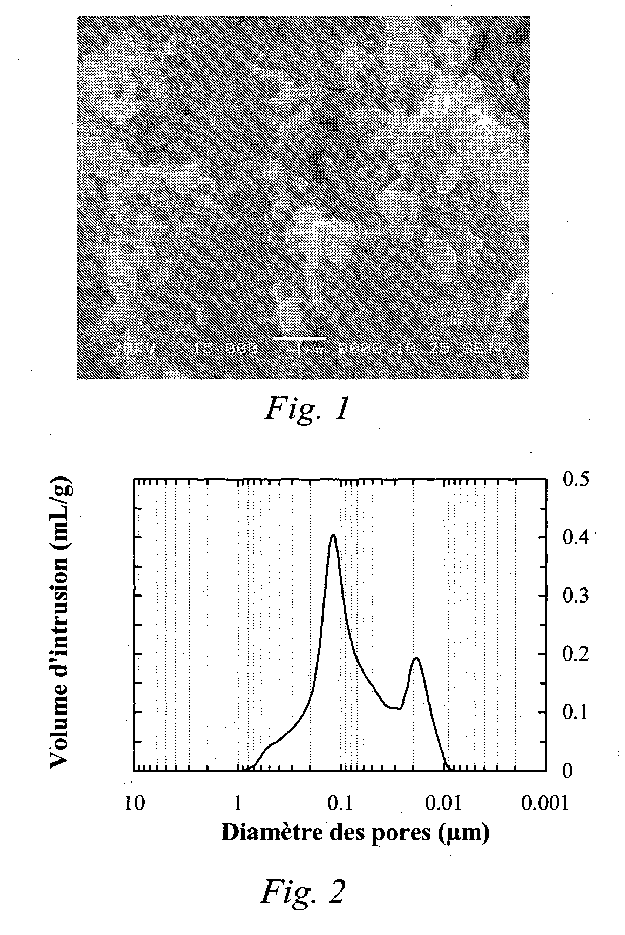

La figure 1 montre le type de structure poreuse obtenu pour les pièces céramiques réalisées à partir de la technique telle que décrite ci-dessus, après traitement thermique à 1550°C pendant 4 heures. Ces pièces céramiques sont caractérisées par une microstructure cohésive qui consiste en des agglomérats d'alumine alpha et en une porosité intergranulaire de type vermiculaire. L'utilisation d'une telle suspension céramique dans cette forme de réalisation particulière, selon l'invention, permet à une pièce céramique d'atteindre déjà une porosité apparente d'au-moins 36%, comme explicité ci-après dans l'exemple 1.

### Etape (b)

La méthode de fabrication selon l'invention comprend donc l'élaboration d'une suspension céramique dans l'étape (a) telle que décrite ci-dessus, à laquelle on ajoute un agent porogène dans l'étape (b). Lors du traitement thermique, ce dernier est alors calciné, la porosité résiduelle correspondant alors sensiblement à la taille et la forme des particules de départ.

Parmi les agents porogènes bien connus de l'état de l'art, on cite plus particulièrement les cokes de pétrole, les billes de PMMA (polyméthyl méthacrylate), les sciures de bois et les amidons.

Dans un mode de réalisation avantageux, l'agent porogène choisi dans la présente invention est un amidon de blé natif ou chimiquement modifié. Il présente une perte à la dessiccation à 110°C de 11,8%. Sa masse volumique apparente est de 1,51 g/cm³ et la taille moyenne de ses particules est de 12 µm. Sa décomposition thermique se caractérise par une perte de masse brutale d'environ 80% à 300°C, laquelle se poursuit jusqu'à 500°C avec le départ du carbone résiduel.

Les propriétés de l'amidon décrites ci-après sont mises à profit pour la fabrication des pièces poreuses. Cet amidon est insoluble dans l'eau jusqu'à une température d'environ 50°C. Au-delà de cette température, notamment entre 50 et 80°C, les liaisons intermoléculaires se renforcent, et les granules d'amidon subissent un gonflement rapide et irréversible par hydratation. Cette dernière a alors pour conséquence de rigidifier la structure en bloquant entre les granules d'amidon le squelette granulaire fait de particules céramiques. Après tempérage entraînant la pyrolyse de l'amidon, puis après frittage de la pièce, la porosité résiduelle avec des tailles de pores d'environ 10 µm est associée à la quantité d'amidon incorporé, et correspond à la forme et la taille des particules d'amidon atteintes lors du processus de consolidation.

Un avantage de cet agent porogène réside donc dans ses propriétés gélifiantes appropriée au procédé suivant l'invention, ce qui évite d'ajouter un autre liant organique de type polyvinylalcool (PVA) ou autre résine polymère, comme il est généralement le cas dans les autres techniques.

Un autre aspect avantageux de ce composant porogène suivant l'invention est qu'il s'agit d'un polymère naturel qui est donc plus écologique et peu coûteux en comparaison des autres types de polymères.

Selon l'invention, le procédé de fabrication du matériau poreux comprend l'incorporation dudit amidon, ou un autre agent porogène, à ladite suspension céramique susmentionnée.

Plus particulièrement, ladite composition de base pour la fabrication du matériau poreux selon l'invention contient la matière céramique et l'agent porogène dans les proportions :
- 40 à 60% en masse de ladite poudre céramique susmentionnée ; 2 à 10% en masse dudit hydroxyde d'aluminium HA spécifique à la présente invention ;
- 7 à 24% en masse d'un agent porogène, en particulier dudit amidon, de préférence 19% en masse ;
- 25 à 35% en masse d'une eau déminéralisée contenant l'agent dispersant susmentionné dans une proportion d'environ 1:100.

Il est important de noter, qu'à cette étape du procédé d'élaboration suivant l'invention, la viscosité de ladite suspension céramique doit être suffisamment faible pour permettre l'incorporation de la quantité voulue d'un agent porogène, en particulier d'amidon, et ainsi assurer une bonne homogénéité dudit mélange.

En outre, la quantité d'agent porogène, par exemple d'amidon, incorporé dans le mélange dépend des caractéristiques microstructurales que l'on cherche à atteindre pour le produit fini, lesquelles peuvent alors être contrôlées et ajustées en fonction de l'application, comme illustré ci-après dans l'exemple 2.

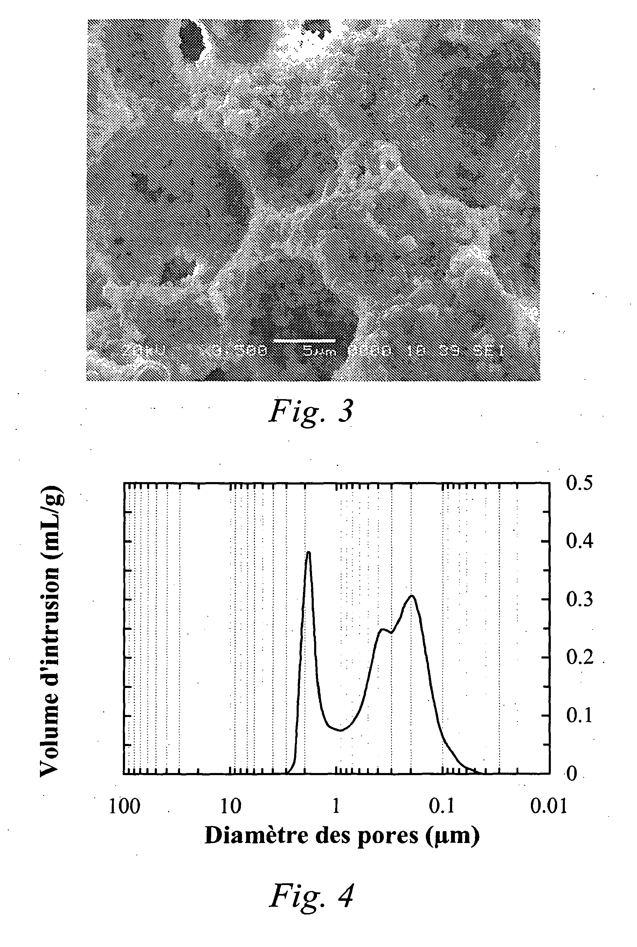

La figure 3 montre le type de structure poreuse obtenu après traitement thermique à 1550°C pendant 4 heures de l'article élaboré selon le procédé tel que décrit ci-dessus avec 15% d'amidon dans le mélange. On retrouve la structure poreuse résultant du frittage des alumines et de l'hydroxyde d'aluminium telle que observée dans la figure 1, et des pores d'environ 10 µm résultant de la calcination de l'amidon.

### Etapes (c) et (d)

Le procédé de fabrication du matériau poreux selon l'invention comprend donc l'élaboration d'une suspension telle que décrite ci-dessus et comprenant, dans un forme de réalisation avantageuse de l'invention, une alumine, un hydroxyde d'aluminium et un amidon, à laquelle on ajoute un agent moussant dans une étape (c). Une mousse céramique est alors formée sous agitation mécanique par ajout d'un agent tensio-actif utilisé comme agent moussant, puis stabilisée par ajout d'un agent stabilisant dans l'étape (d).

Selon ce principe, la suspension céramique est aérée en produisant des petites bulles d'air par une agitation mécanique vigoureuse. Il en résulte un produit contenant des bulles d'air de tailles uniformes et réparties de façon homogène.

Dans un mode particulier de l'invention, l'agent moussant servant à aérer la suspension céramique produite est choisi de manière appropriée parmi les agents tensio-actifs anioniques, comme le laurylsulfate de sodium, de préférence du sulfate d'ammonium et de dodécyle, ou encore à base de produits de décomposition de protéines comme l'albumine.

L'incorporation dans la formulation dudit agent moussant susmentionné s'accompagne de l'ajout d'un agent stabilisant qui a pour effet de figer la mousse céramique qui vient d'être produite. L'agent stabilisant est par exemple constitué par une poudre à base de bentonite.

La mousse céramique selon l'invention est donc constituée d'un mélange de matières céramiques, de préférence d'alumine et d'hydroxyde d'aluminium, d'un agent porogène, de préférence d'amidon, d'un agent moussant liquide, en particulier du sulfate d'ammonium et de dodécyle, et d'un agent stabilisant, en particulier un composé à base de bentonite.

Plus particulièrement, la composition de base pour la fabrication du matériau poreux selon l'invention contient la matière céramique, l'agent porogène, l'agent moussant et l'agent stabilisant dans les proportions :
- 40 à 60% en masse de ladite poudre céramique susmentionnée
- 2 à 10% en masse dudit hydroxyde d'aluminium HA spécifique à la présente invention
- 7 à 24% en masse dudit agent progène, en particulier d'amidon, de préférence 19%
- 1,5 à 4% en masse dudit agent moussant, de préférence 3%
- 0,1 à 0,4% en masse dudit agent stabilisant, de préférence 0,2%
- 25 à 35% en masse d'une eau déminéralisée, contenant l'agent dispersant susmentionné dans la proportion d'environ 1:100.

L'ajout dudit agent moussant à la préparation céramique peut s'accompagner d'un changement significatif de viscosité de la pâte céramique, notamment d'une baisse de la viscosité comme observé dans la présente invention.

En outre, le réglage de la consistance de la pâte céramique permet de former une mousse dont les caractéristiques intrinsèques, en termes de porosité, tailles des pores ou de degré d'interconnectivité, dépendant du type d'application, sont alors contrôlées et ajustées.

Pour ce faire, un agent tensio-actif approprié peut être ajouté à ladite mousse céramique après que l'ajout de l'agent moussant se soit accompagné d'un changement de viscosité de la pâte céramique. En outre, le réglage de viscosité de la pâte céramique grâce à cet agent tensio-actif peut se faire simultanément et de manière progressive avec l'ajout également progressif dudit agent moussant. De cette manière, en se référant aux considérations énoncées plus haut, les caractéristiques intrinsèques du matériau fini sont définies et contrôlées en choisissant convenablement le type d'agent tensio-actif et la quantité ajoutée dans le mélange.

Dans un mode préféré de réalisation, ledit agent tensio-actif est choisi parmi les polyélectrolytes ayant pour fonction de modifier la charge de surface des particules céramiques contenues dans le mélange, en particulier ceux permettant de réagglomérer les particules, comme le poly(4-vinylpyridine) (PVP), de préférence le polyéthylène imine (PEI) comme utilisé dans la présente invention.

De plus, il est essentiel de noter qu'à cette étape de réalisation, le réglage des paramètres d'élaboration de ladite mousse céramique est prépondérant dans l'obtention des caractéristiques microstructurales désirées pour le produit fini, notamment la vitesse de la pale d'agitation, et le temps d'agitation.

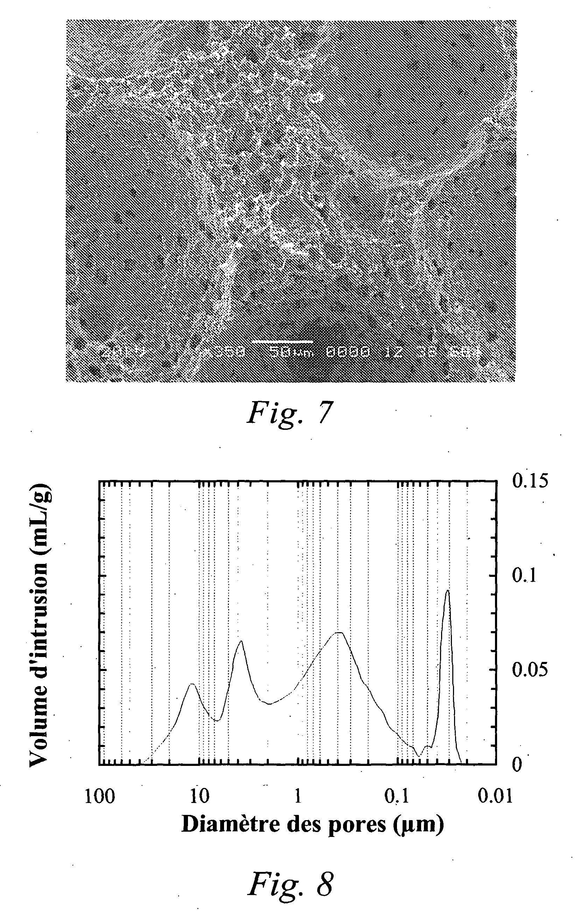

La figure 7 montre le type de structure poreuse obtenu pour le matériau fabriqué à partir du procédé selon la présente invention qui résulte donc de l'association des trois techniques générant de la porosité, à savoir la décomposition thermique de l'hydroxyde d'aluminium, la calcination de l'amidon, et enfin la production d'une mousse comme explicité dans l'exemple 3. On retrouve alors bien les trois répartitions de tailles de pores associées à ces trois générateurs de porosité, centrées sur environ 100 nm pour l'hydroxyde d'aluminium, environ 10 µm pour l'amidon et environ 100 µm pour l'agent moussant.

Le cas échéant, si nécessaire, un liant inorganique peut être ajouté en dernier lieu à la mousse céramique pour s'adapter à des conditions particulières, et rendre ainsi la mise en oeuvre du produit plus flexible et plus facile.

Dans ce cas particulier de réalisation, on tire seulement profit des propriétés porogènes de l'hydroxyde d'aluminium et de l'amidon et pas spécialement de leurs propriétés gélifiantes. Suivant cette forme de réalisation, on n'engendre pas de déformation des granules d'amidon ou même leur effondrement en formant un gel. De cette manière, l'intégrité physique des particules d'amidon est conservée lors du traitement à froid du produit coulé.

Plus particulièrement, le liant peut être choisi parmi les liants minéraux comme les liants hydrauliques qui durcissent à l'eau, notamment le ciment alumineux, l'alumine hydratable ou comme les liants chimiques qui durcissent par réaction chimique, notamment les silicates d'alcalins.

Dans un mode préféré de réalisation, l'alumine hydratable est utilisée comme liant dans la présente invention pour conférer au matériau final une haute teneur en alumine et ainsi lui assurer une bonne réfractarité.

Dans l'étape (e) l'on coule la mousse céramique obtenue suivant les étapes précédentes dans un moule. Ensuite, l'étape (f) comprend la gélification de l'agent organique naturel au sein de cette mousse céramique de sorte à obtenir une masse rigide. La mousse céramique formant ainsi cette masse rigide est alors, dans une étape (g) du procédé suivant l'invention, soumise à un traitement thermique par tempérage pour éliminer l'eau résiduelle et les fragments de décomposition de l'agent organique naturel, et finalement traitée à haute température pour réaliser la consolidation de la pièce par frittage des matières céramiques.

La présente invention a également pour objet un matériau céramique utilisé dans certaines applications industrielles pour sa légèreté, **caractérisé en ce qu**'il est fabriqué selon le procédé de fabrication tel que décrit ci-dessus à partir de matières premières réfractaires et légères qui sont choisies parmi les silicates d'aluminium et/ou qui sont formées par la silice.

Dans un mode préféré de réalisation, ledit matériau est fabriqué principalement à partir d'une matière première pulvérulente de densité absolue inférieure à 3, de préférence inférieure à 2,5, qui peut être une argile réfractaire, la sillimanite, le kaolin, l'andalousite, la mullite, la silice ou un mélange de deux ou plusieurs de ces composés.

Avantageusement, un agent défloculant approprié est utilisé pour la dispersion des particules au sein de la suspension céramique susmentionnée. Cet agent défloculant comprend le plus souvent du carbonate de sodium anhydre utilisé en combinaison avec du silicate de sodium en solution aqueuse.

Plus particulièrement, ledit matériau est obtenu à partir d'une suspension céramique qui comprend :
- 40 à 60% en masse de ladite matière première pulvérulente formée de poudre céramique ;
- 2 à 10% en masse dudit hydroxyde d'aluminium HA spécifique à la présente invention ;
- 7 à 24% en masse dudit amidon, de préférence 19% ;
- 1,5 à 4% en masse dudit agent moussant, de préférence 3% ;
- 0,1 à 0,4% en masse dudit agent stabilisant, de préférence 0,2% ;
- 30 à 40% en masse d'une eau déminéralisée ;
- 0,03 à 0,15% en masse de carbonate de sodium ;
- 0,1 à 0,2% en masse de silicate de sodium.

Le matériau céramique qui est obtenu à partir de la suspension céramique susmentionnée et fabriqué selon le procédé suivant l'invention, et dont une forme intéressante est décrit dans l'exemple 4, possède une densité apparente inférieure à 1, de préférence inférieure à 0,5 et une porosité ouverte variant de 70 à 90%.

Un but de la présente invention est notamment de fournir un matériau à haute teneur en alumine destiné à l'isolation thermique, proposé ainsi comme solution alternative aux matériaux à base de fibres céramiques réfractaires.

En outre, ledit matériau céramique suivant l'invention, obtenu à partir de la suspension céramique susmentionnée et fabriqué selon le procédé suivant l'invention, possède une réfractarité supérieure à 1300°C, de préférence 1600°C, ainsi qu'une faible conductivité thermique, notamment inférieure à 0,4 W/m.K⁻¹ pour une mesure à 1100°C.

Dans un mode préféré de réalisation, ledit matériau est fabriqué selon le procédé tel que décrit dans l'invention à partir d'un mélange de poudres d'alumine et de silice. Un tel matériau présente des excellentes propriétés lorsque il est utilisé comme matériau isolant, par exemple, à des températures supérieure à 1300°C.

La poudre de silice de ce mélange comprend, en particulier de la microsilice référencée S qui est une poudre de silice amorphe SiO₂ pouvant contenir une part de silicium métallique. Sa distribution granulométrique s'étale de 0,1 à 0,8 µm avec une taille moyenne des grains de 0,3 µm pour la première population, et de 3 à 100 µm avec une taille moyenne des grains de 30 µm pour la deuxième population. Sa surface spécifique est de 13,8 m²/g et sa densité absolue est de 2,55.

Plus particulièrement, ledit matériau isolant est fabriqué à partir d'une composition de base comprenant:
- 38 à 52% en masse de la poudre d'alumine susmentionnée ;
- 5 à 10% en masse de la poudre de silice susmentionnée ;
- 2 à 10% en masse dudit hydroxyde d'aluminium HA spécifique à la présente invention ; .
- 7 à 24% en masse dudit amidon, de préférence 19% ;
- 1,5 à 4% en masse dudit agent moussant, de préférence 3% ;
- 0,1 à 0,4% en masse dudit agent stabilisant, de préférence 0,2% ;
- 25 à 35% en masse d'une eau déminéralisée contenant l'agent dispersant susmentionné environ dans la proportion 1:100.

Suivant une forme de réalisation intéressante, lors de la préparation à l'étape (a) de la suspension céramique selon le procédé, une mousse est générée naturellement par réaction entre la portion métallique contenue dans la poudre de silice et les différents alcalins du mélange.

Selon un mode de réalisation avantageux, les caractéristiques intrinsèques dudit matériau isolant lui sont conférées par une distribution en taille des pores particulière apportée par la silice spécifique à la présente invention, et par les propriétés intrinsèques des phases présentes au sein du matériau après frittage, en particulier celles relatives à la mullite 3Al₂O₃-2SiO₂ qui s'est formée lors de la cuisson du produit.

D'une façon générale, le procédé de fabrication de matériaux poreux, selon l'invention, possède donc la particularité d'associer plusieurs techniques permettant d'induire de la porosité.

En particulier, la méthode de fabrication selon l'invention permet de générer une porosité dont la distribution dimensionnelle des pores résulte de la décomposition thermique d'un hydrate d'aluminium, de la décomposition d'un agent porogène organique naturel et enfin de l'aération de la suspension de base sous l'action d'un agent moussant.

En outre, le procédé de fabrication de matériau poreux selon l'invention présente l'avantage de contrôler la porosité en favorisant telle ou telle taille particulière de pores. Il présente également les avantages de mettre en oeuvre le produit relativement facilement et rapidement, et de réaliser toute forme possible de pièce. La rentabilité du procédé selon l'invention du point de vue économique est indéniable en raison de l'utilisation de produits secondaires et relativement bon marché.

Le procédé de fabrication selon l'invention et les produits poreux ainsi fabriqués peuvent être utilisés dans tous les domaines technologiques où des caractéristiques de légèreté, de résistance thermomécanique, de résistance à la chaleur sont recherchées.

On peut citer notamment :
- Les applications industrielles liées aux procédés thermiques, en particulier le garnissage des fours industriels et des conduits de fumée ou encore l'isolation de chaudières industrielles...
- Les applications industrielles liées à la filtration, matériau poreux utilisé comme filtre céramique à particules (gaz chauds) ou à liquide pour la filtration du métal en fusion en métallurgie...
- Les applications industrielles liées à la catalyse, matériau poreux utilisé comme support de catalyseur pour l'industrie automobile, l'industrie chimique et pétrochimique, ou catalyseur pour le traitement des fumées dans les incinérateurs.

### Exemple 1.

Cet exemple illustre le gain de porosité apporté par l'incorporation de la poudre d'hydroxyde d'aluminium HA, spécifique à la présente invention, dans une composition céramique. Une suspension céramique est alors préparée en dispersant respectivement 46% et 21% en masse des poudres d'alumine A1 et A2 dans 27% en masse d'eau déminéralisée contenant le dispersant de type polyélectrolyte (dans un rapport 1:100). Ladite suspension céramique est homogénéisée à l'aide d'un mélangeur à pales pendant 1 heure avant d'y ajouter 6% en masse de la poudre d'hydroxyde d'aluminium. Cette suspension céramique est mélangée encore pendant 1 heure au mélangeur à pales avant d'être placée dans une jarre contenant des billes d'alumine comme media de broyage, laquelle est placée pendant 18 heures dans une enceinte vibrante. Cette opération a pour effet de désagglomérer et d'homogénéiser la suspension. Après cette étape, la suspension possède une viscosité importante attribuée à la présence de la phase amorphe contenue dans la poudre d'hydroxyde d'aluminium utilisée. Le mélange visqueux est alors coulé dans un moule et placé dans une étuve à 50°C pendant 12 heures, puis à 110°C pendant encore 12 heures. Après démoulage, l'article est cuit à 1550°C pendant 4 heures avec une vitesse de montée en température de 5°C/min. Il en résulte une céramique poreuse de densité apparente égale à 2,53 et dont la porosité totale atteint 36% en volume. La distribution en taille des pores montrée dans la figure 2 est caractérisée par deux pics centrés respectivement sur ∼20 nm et 100 nm. Le gain de porosité obtenu alors est de 20% en volume par rapport au même matériau élaboré seulement à partir des deux poudres d'alumine. Le matériau ainsi fabriqué possède une surface spécifique d'environ 20 m²/g.

### Exemple 2.

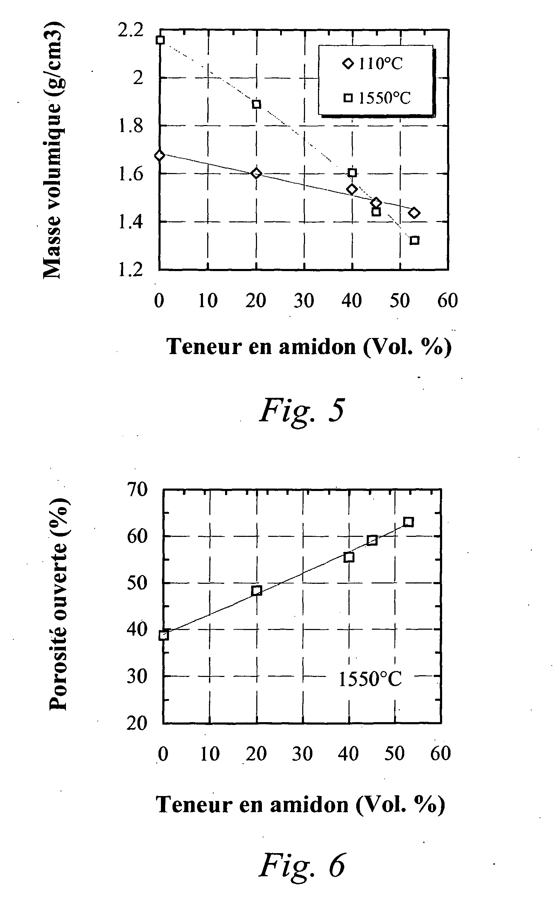

Cet exemple illustre la possibilité d'ajuster la microstructure en utilisant l'amidon dans des proportions adéquates au sein de la composition telle que décrite dans l'exemple 1. Le protocole expérimental tel que décrit ci-dessus pour l'exemple 1 reste alors inchangé, à la différence que, à la suspension céramique issue du broyeur à billes, sont ajoutées des fractions d'amidon (de 0 à 53 % en volume de matières solides) afin d'évaluer la transformation de la structure poreuse avec l'augmentation de la teneur en amidon. Pour ce faire, cinq aliquotes de 100 cm³ sont alors prélevées dans la suspension issue du mélangeur à billes de l'exemple 1. Un volume d'amidon est ajouté à chacune de ces aliquotes, respectivement 0, 19, 50, 62 et 85 cm³. Après homogénéisation pendant 1 heure grâce au mélangeur à pales, chaque spécimen est coulé dans un moule et ensuite placé dans une étuve à 50°C pendant 12 heures puis à 110°C pendant encore 12 heures. Après démoulage, ces cinq articles sont cuits à 1550°C pendant 4 heures avec une vitesse de montée en température de 5°C/min. La figure 5 montre la variation de densité des articles avant et après cuisson en fonction de la teneur en amidon incorporé dans le mélange de départ. Pour les articles pris avant cuisson, la densité décroît très légèrement avec l'augmentation de la teneur en amidon, passant de 1,67 pour le matériau sans amidon à 1,43 pour le matériau contenant 53% d'amidon en volume. La densité des matériaux cuits décroît quant à elle de manière plus significative avec l'augmentation de la teneur en amidon, passant de 2,2 pour le matériau sans ajout d'amidon à 1,3 pour le matériau contenant 53% d'amidon en volume. La figure 6 illustre le gain de porosité obtenu après cuisson des matériaux en fonction de la fraction d'amidon. La porosité ouverte passe alors d'environ 38% pour le matériau sans amidon à 63% pour le matériau contenant le maximum d'amidon. Le matériau ainsi fabriqué avec 53% d'amidon possède une surface spécifique de 3,60 m²/g.

### Exemple 3.

Cet exemple est l'illustration d'une forme de réalisation particulière du procédé de fabrication, selon l'invention, d'un matériau céramique réfractaire à haute teneur en alumine, léger et isolant.

### Préparation de la suspension céramique :

La suspension céramique est préparée suivant le même protocole expérimental tel que décrit ci-dessus dans l'exemple 1, et **caractérisée en ce qu**'elle contient :
- 39% en masse d'alumine fine A1 ;
- 20,60% en masse d'alumine grossière A2 ;
- 3,70% en masse de la poudre d'hydroxyde d'aluminium HA ;
- 9,20% en masse de silice S ;
- 27,50% en masse d'eau déminéralisée contenant l'agent dispersant dans la proportion 1:100.

### Préparation du matériau réfractaire isolant :

A la sortie de l'enceinte vibrante, ladite suspension céramique est homogénéisée à nouveau à l'aide du mélangeur à pales avant d'y incorporer progressivement l'amidon (9:100 en poids de la suspension céramique), puis l'agent moussant (4,12 :100 en poids de la suspension céramique), et enfin l'agent stabilisant (0,3 :100 en poids de la suspension céramique). L'ajustement de la consistance de la pâte céramique a été réalisé par l'ajout du polyéthylène imine (PEI) au fur et à mesure qu'on ajoute l'agent moussant. L'alumine hydratable est alors incorporée (7 :100 en poids de la suspension céramique) pour consolider par la suite le matériau. La mousse céramique est alors coulée dans un moule et laissée à sécher à l'air ambiant pendant 48 heures, puis placée dans une étuve à 50°C pendant 12 heures, et encore 12 heures à 110°C. Après démoulage, l'article est cuit à 1550°C pendant 4 heures avec une vitesse de montée en température de 5°C/min.

Le tableau suivant donne l'analyse chimique dudit matériau réfractaire obtenu selon le procédé de fabrication tel que décrit dans cet exemple.

| **Analyse chimique** | **Valeur (%)** |
|---|---|
| Al₂O₃ | 87,50 |
| SiO₂ | 12,00 |
| Fe₂O₃ | 0,07 |
| TiO₂ | 0,01 |
| CaO | 0,18 |
| MgO | 0,07 |
| Na₂O + K₂O | 0,12 |

L'analyse minéralogique dudit matériau réfractaire isolant montre qu'il contient 57% en masse d'alumine Al₂O₃ et 43% en masse de mullite 3Al₂O₃-2SiO₂.

Le matériau léger isolant ainsi fabriqué possède une surface spécifique de 5,40 m²/g_{.}

Les principales caractéristiques de ce matériau réfractaire et isolant de l'exemple 3 sont données dans le tableau ci-après.

| | | |
|---|---|---|
| | | |
| Classification ISO 2245 | | 1.70 0.8L |
| Température de classification | °C | 1730 |

| **Caractéristiques mesurées à température ambiante** | | |
|---|---|---|
| Masse volumique | kg/m³ | 800 |
| Porosité ouverte | % | 81 |
| Résistance à la compression | MPa | 12 |

| **Caractéristiques à haute température** | | |
|---|---|---|
| Retrait linéaire permanent (1600°C, 24h) | % | 0.6 |
| Affaissement sous charge, T_{0.5%} | °C | 1585 |
| Conductivité thermique à 1100°C | W/m.K | 0.25 |

### Exemple 4.

Cet exemple est l'illustration d'une forme de réalisation particulière du procédé de fabrication, selon l'invention, d'un matériau céramique à base d'argile réfractaire fabriqué selon la procédure telle que décrite dans l'exemple précédent.

La suspension céramique de base du matériau est élaborée en substituant l'alumine par du kaolin, et l'agent dispersant de type polyélectrolyte par du carbonate de sodium anhydre et du silicate de sodium en solution aqueuse (densité = 1,33-1,35).

Dans ce cas, le carbonate de sodium est dissout dans 5% d'eau à introduire dans la suspension par chauffage à 40-45°C. Cette solution est ajoutée à l'eau restante et à une première fraction de la quantité de silicate de sodium à ajouter. L'argile est ensuite incorporée à la solution par fractions successives. Lorsque la suspension argileuse s'épaissit, on procède à un nouvel ajout de silicate de sodium jusqu'à épuisement de toute l'argile à incorporer.

La composition pondérale de la suspension céramique, préparée selon le même protocole expérimental tel que décrit dans l'exemple 1, est donnée ci-après :
- 56% en masse de kaolin
- 9% en masse de la poudre d'hydroxyde d'aluminium HA
- 31% en masse d'eau déminéralisée
- 1,25% en masse de carbonate de sodium
- 2,75% en masse de silicate de soude

L'analyse chimique du kaolin utilisé dans cet exemple est donné au tableau ci-après :

| **Analyse chimique** | **Valeur (%)** |
|---|---|
| SiO₂ | 47,00 |
| Al₂O₃ | 37,00 |
| Fe₂O₃ | 0,80 |
| TiO₂ | 0,20 |
| CaO | 0,35 |
| MgO | 0,30 |
| Na₂O + K₂O | 1,00 |
| Perte à la dessiccation (1000°C) | 13,35% |

### Préparation du matériau réfractaire léger :

A la sortie de l'enceinte vibrante, ladite suspension céramique est homogénéisée à nouveau à l'aide du mélangeur à pales avant d'y incorporer progressivement à température ambiante l'amidon (9 :100 en poids de la suspension céramique), puis l'agent moussant (4,12 :100 en poids de la suspension céramique), et enfin l'agent stabilisant (0,3 :100 en poids de la suspension céramique). La mousse céramique est alors coulée dans un moule et laissée à sécher à température ambiante pendant 48 heures puis placée dans une étuve à 50°C pendant 12 heures, et encore 12 heures à 110°C. Après démoulage, l'article est cuit à 1550°C pendant 4 heures avec une vitesse de montée en température de 5°C/min.

Le matériau réfractaire léger possède une densité apparente de 0,35 et une porosité ouverte d'environ 87%.

## Revendications

1. Procédé de fabrication d'un matériau céramique réfractaire à porosité **caractérisé en ce que** ce procédé comprend les étapes suivantes :
- mélanger en suspension aqueuse de poudres céramiques, d'un hydroxyde d'un métal réfractaire, tel que l'hydroxyde d'aluminium, de magnésium ou de zirconium, et d'un agent dispersant ;
- ajouter un agent organique granulaire comme agent porogène ;
- ajouter un agent moussant ;
- soumettre le mélange avec les composants susdits à une agitation mécanique pour obtenir une mousse céramique ;
- stabiliser la mousse céramique ainsi obtenue par l'ajout d'un agent stabilisant ;
- couler la mousse céramique stabilisée dans un moule ;
- soumettre cette mousse céramique stabilisée à un étuvage afin d'éliminer au moins une partie de l'eau présente ; et
- soumettre cette mousse à un traitement à haute température.

2. Procédé suivant la revendication 1, **caractérisé en ce que** l'on utilise des poudres céramiques comprenant plusieurs fractions granulométriques distinctes.

3. Procédé suivant l'une des revendications 1 ou 2, **caractérisé en ce que** l'on utilise des poudres céramiques comprenant des fractions avec une granulométrie différente dans un rapport entre la fraction la plus grossière et la fraction la plus fine qui est compris entre 0,2 et 0,5.

4. Procédé suivant l'une quelconque des revendications 1 à 3, **caractérisé en ce que** l'on utilise des poudres céramiques comprenant au moins un des composés suivants : de l'argile réfractaire, de la sillimanite , du kaolin, de l'andalousite, de la mullite, de la silice ou de l'alumine.

5. Procédé suivant l'une quelconque des revendications 1 à 3, **caractérisé en ce que** l'on utilise des poudres céramiques qui sont essentiellement constituées d'alumine.

6. Procédé suivant la revendication 5, **caractérisé en ce que** l'on utilise l'alumine susdite sous deux formes, dont une première forme possède une distribution monomodale s'étalant de 0,1 à 4 µm, avec une taille moyenne de grains de 0,4µm, et dont une deuxième forme est constituée d'une alumine calcinée avec une distribution granulométrique bimodale s'étalant de 0,2 à 40 µm avec une taille moyenne des grains de l'ordre de 2,57 µm.

7. Procédé suivant l'une quelconque des revendications 1 à 6, **caractérisé en ce que** l'hydroxyde d'aluminium est utilisé en majorité sous forme amorphe, en particulier, l'hydroxyde d'aluminium contenant entre 50 et 60% en masse d'une phase amorphe et 40 à 50% en masse de phases cristallisées, ces dernières comprenant de 10 à 20% en masse de bayerite et de 25 à 35% en masse de boehmite.

8. Procédé suivant l'une quelconque des revendications 1 à 7, **caractérisé en ce que** l'on utilise un agent organique granulaire comprenant un amidon, en particulier un amidon natif ou chimiquement modifié.

9. Procédé suivant la revendication 8, **caractérisé en ce que** l'on utilise de l'amidon présentant des particules avec une taille moyenne de l'ordre de 12µm.

10. Procédé suivant l'une quelconque des revendications 1 à 9, **caractérisé en ce que** l'agent organique granulaire, en particulier de l'amidon, est ajouté à la suspension aqueuse à température ambiante.

11. Procédé suivant l'une quelconque des revendications 1 à 10, **caractérisé en ce que** l' on utilise un agent moussant à ajouter à la suspension qui est choisi parmi des agents tensio-actifs, comme du laurylsulfate de sodium, en particulier de sulfate d'ammonium et de dodécycle, et des produits de décomposition, et des protéines ou dérivés, comme de l'albumine.

12. Procédé suivant l'une quelconque des revendications 1 à 11, **caractérisé en ce que** la mousse céramique est formée par aération de ladite suspension aqueuse au moyen d'un agent tensio-actif et que la stabilisation de la mousse est assurée par l'ajout d' un polyélectrolyte.

13. Procédé suivant l'une quelconque des revendications 1 à 12 **caractérisé en ce que** la mousse céramique est additionnée d'un liant minéral hydraulique ou chimique.

14. Procédé suivant l'une quelconque des revendications 1 à 13, **caractérisé en ce que** l'on utilise des poudres céramiques comprenant une poudre de silice amorphe contenant, de préférence, une fraction de silicium métallique.

15. Procédé suivant la revendication 14, **caractérisé en ce que** la poudre de silice amorphe est utilisée sous deux formes, dont une première forme présente des particules de 0,1 à 0,8 µm avec une taille moyenne de l'ordre de 0,3 µm, et dont une deuxième forme présente des particules de 3 à 100 µm avec une taille moyenne de l'ordre de 30 µm.

16. Procédé suivant la revendication 14 ou 15, **caractérisé en ce que** ladite mousse céramique est formée par réaction entre la fraction de silicium métallique et des alcalins contenus dans ladite suspension aqueuse, ce silicium métallique formant ainsi un agent moussant.

17. Procédé suivant l'une quelconque des revendications 1 à 16, **caractérisé en ce que** la mousse céramique est exposée à une température entre 30 et 60°C, et de préférence à une température de l'ordre de 50°C pour provoquer un durcissement de cette mousse par l'action liante d'une phase amorphe de l'hydroxyde d'aluminium.

18. Procédé suivant l'une des revendications 8 ou 9, **caractérisé en ce que** la température de l'étuvage est graduellement augmentée au fur et à mesure du séchage de la mousse céramique afin d'éviter la gélification de l'amidon et de maintenir l'intégrité des particules d'amidon.

19. Procédé de fabrication d'un matériau céramique à porosité multimodale, suivant la revendication 1, dans lequel l'on prépare une suspension aqueuse contenant :
- 40 à 60% en masse d'une poudre céramique ;
- 2 à 10% en masse de l'hydroxyde d'aluminium ;
- 7 à 24% en masse d'amidon, de préférence de l'ordre de 19% ;
- 1,5 à 4 % en masse d'un agent moussant, de préférence de l'ordre de 3% ;
- 25 à 35% en masse d'une eau déminéralisée contenant un agent dispersant dans une proportion de l'ordre de 1 :100,
l'on soumet cette suspension aqueuse à une agitation mécanique pour obtenir une mousse céramique, l'on soumet cette mousse à un étuvage à une température entre 50°C et 110°C, et l'on soumet ensuite cette mousse à une haute température, de préférence comprise entre 1500°C et 1600°C.

20. Procédé de fabrication d'un matériau céramique avec une porosité multimodale de 70% à 90%, suivant la revendication 1, dans lequel l'on prépare une suspension aqueuse contenant :
- 40 à 60% en masse d'une poudre céramique ;
- 2 à 10% en masse de l'hydroxyde d'aluminium ;
- 7 à 24% en masse d'amidon, de préférence 19% ;
- 1,5 à 4% en masse d'un agent moussant, de préférence 3% ;
- 0,1 à 0,4% en masse d'un agent stabilisant, de préférence 0,2% ;
- 30 à 40% en masse d'une eau déminéralisée ;
- 0,03 à 0,15% en masse de carbonate de sodium ;
- 0,1 à 0,2% en masse de silicate de sodium.
et dans lequel l'on soumet cette suspension aqueuse à une agitation mécanique pour obtenir une mousse céramique, l'on soumet cette mousse à un étuvage à une température entre 50°C et 110°C, et l'on soumet ensuite cette mousse à une haute température, de préférence comprise entre 1500°C et 1600°C.

21. Procédé de fabrication d'un matériau céramique poreux, suivant la revendication 1, dans lequel l'on prépare une suspension aqueuse contenant :
- 38 à 52% en masse d'une poudre d'alumine ;
- 5 à 10% en masse d'une poudre de silice ;
- 2 à 10% en masse d'hydroxyde d'aluminium ;
- 7 à 24% en masse d'amidon, de préférence 19% ;
- 1,5 à 4% en masse d'agent moussant, de préférence 3% ;
- 0,1 à 0,4% en masse d'un agent stabilisant, de préférence 0,2% ;
- 25 à 35% en masse d'eau déminéralisée contenant un agent dispersant dans une proportion de l'ordre de 1:100.
et dans lequel l'on soumet cette suspension aqueuse à une agitation mécanique pour obtenir une mousse céramique, l'on soumet cette mousse à un étuvage à une température entre 50°C et 110°C, et l'on soumet ensuite cette mousse à une haute température, de préférence comprise entre 1500°C et 1600°C.

## Claims

1. Production method for a refractory ceramic material with a porosity **characterised in that** this process comprises the following steps:
- mixing ceramic powders, the hydroxide of a refractory metal such as aluminium hydroxide, magnesium hydroxide or zirconium hydroxide and a dispersing agent into a water suspension;
- adding an organic granular agent as a pore-forming agent;
- adding a foaming agent;
- subjecting the mixture with the above-mentioned constituents to a mechanical stirring so as to obtain a ceramic foam;
- stabilising the thus obtained ceramic foam by adding a stabilizer;
- casting the stabilised ceramic foam in a mould;
- subjecting this stabilised ceramic foam to a firing in order to eliminate at least part of the water that is present; and
- subjecting this foam to a high-temperature treatment.

2. Process according to claim 1, **characterised in that** ceramic powders comprising several fractions having a different granulometry are used.

3. Process according to any one of claims 1 or 2, **characterised in that** ceramic powders comprising fractions with a different granulometry are used whereby the ratio between the roughest fraction and the finest fraction is situated between 0.2 and 0.5.

4. Process according to any one of claims 1 to 3, **characterised in that** ceramic powders are used comprising at least one of the following compounds: refractory clay, sillimanite, kaolin, andalusite, mullite, silica or aluminium.

5. Process according to any one of claims 1 to 3, **characterised in that** ceramic powders are used which are mainly formed of aluminium.

6. Process according to claim 5, **characterised in that** the above-mentioned aluminium is used in two forms, a first form of which has a monomodal distribution situated between 0.1 to 4 µm, with a minimum grain size of 0.4µm, and a second form of which is made of a calcined aluminium with a bimodal grain size distribution situated between 0.2 and 40 µm with an average grain size in the order of 2.57 µm.

7. Process according to any one of claims 1 to 6, **characterised in that** the aluminium hydroxide is mainly used in an amorphous form, in particular the aluminium hydroxide containing between 50 and 60% by mass of an amorphous phase and 40 to 50% by mass of crystallised phases, the latter comprising 10 to 20% by mass of bayerite and 25 to 35% by mass of boehmite.

8. Process according to any one of claims 1 to 7, **characterised in that** an organic granular agent is used comprising a starch, in particular a native starch or a chemically modified starch.

9. Process according to claim 8, **characterised in that** a starch is used having particles with an average size in the order of 12µm.

10. Process according to any one of claims 1 to 9, **characterised in that** the granular organic agent, in particular the starch, is added to the watery suspension at ambient temperature.

11. Process according to any one of claims 1 to 10, **characterised in that** a foaming agent is used to be added to the suspension which is selected from surface-active agents, such as sodium lauryl sulphate, in particular ammonium sulphate and dodecycle sulphate, and decomposition products, and proteins or derivatives, such as albumin.

12. Process according to any one of claims 1 to 11, **characterised in that** the ceramic foam is formed by aerating said watery suspension by means of a surface-active agent and that the stabilization of the foam is guaranteed by adding a polyelectrolyte.

13. Process according to any one of claims 1 to 12, **characterised in that** the ceramic foam is supplemented with a hydraulic or chemical mineral binder.

14. Process according to any one of claims 1 to 13, **characterised in that** ceramic powders are used comprising an amorphous silica powder, preferably containing a fraction of metallic silicium.

15. Process according to claim 14, **characterised in that** the amorphous silica powder is used in two forms, a first form of which has particles in the order of 0.1 to 0.8 µm with an average size in the order of 0.3 µm, and a second form of which has particles in the order of 3 to 100 µm with an average size of 30 µm.

16. Process according to claim 14 or 15, **characterised in that** said ceramic foam is formed by a reaction between the metallic silicium fraction and alkalines contained in said watery suspension, whereby the metallic silicium thus forms a foaming agent.

17. Process according to any one of claims 1 to 16, **characterised in that** the ceramic foam is exposed to a temperature between 30 and 60°C, and preferably to a temperature in the order of 50°C so as to provoke a hardening of the foam through the bonding action of an amorphous phase of the aluminium hydroxide.

18. Process according to claim 8 or 9, **characterised in that** the oven drying temperature is gradually increased as the ceramic foam dries in order to avoid gelation of the starch and to maintain the integrity of the starch particles.

19. Production method of a ceramic material with multimodal porosity according to claim 1, whereby a watery suspension is prepared containing:
- 40 to 60% by mass of a ceramic powder;
- 2 to 10% by mass of aluminium hydroxide;
- 7 to 24% by mass of starch, preferably in the order of 19%;
- 1.5 to 4 % by mass of a foaming agent, preferably in the order of 3%;
- 25 to 35% by mass of a demineralised water containing a dispersing agent in a proportion in the order of 1 :100,
whereby this watery suspension is subjected to a mechanical stirring in order to obtain a ceramic foam, said foam is subjected to oven drying at a temperature between 50°C and 110°C, and said foam is then subjected to a high temperature, preferably comprised between 1500°C and 1600°C.

20. Production method of a ceramic material with a multimodal porosity of 70% to 90% according to claim 1, in which a watery suspension is prepared containing:
- 40 to 60% by mass of a ceramic powder;
- 2 to 10% by mass of aluminium hydroxide;
- 7 to 24% by mass of starch, preferably 19%;
- 1.5 to 4% by mass of a foaming agent, preferably 3%;
- 0.1 to 0.4% by mass of a stabilizer, preferably 0.2%;
- 30 to 40% by mass of a demineralised water;
- 0.03 to 0.15% by mass of sodium carbonate;
- 0.1 to 0.2% by mass of sodium silicate,
and whereby this watery suspension is subjected to mechanical stirring in order to obtain a ceramic foam, said foam is subjected to oven drying at a temperature between 50°C and 110°C, and said foam is subsequently subjected to a high temperature, preferably comprised between 1500°C and 1600°C.

21. Production method of a porous ceramic material according to claim 1, whereby a watery suspension is prepared containing:
- 38 to 52% by mass of an aluminium powder;
- 5 to 10% by mass of a silica powder;
- 2 to 10% by mass of aluminium hydroxide;
- 7 to 24% by mass of starch, preferably 19%;
- 1.5 to 4% by mass of a foaming agent, preferably 3%;
- 0.1 to 0.4% by mass of a stabilizer, preferably 0.2%;
- 25 to 35% by mass of demineralised water containing a dispersing agent in a proportion in the order of 1:100,
and whereby this watery suspension is subjected to mechanical stirring in order to obtain a ceramic foam, said foam is subjected to oven drying at a temperature between 50°C and 110°C, and said foam is subsequently subjected to a high temperature, preferably comprised between 1500°C and 1600°C.

## Patentansprüche

1. Verfahren zur Herstellung eines feuerfesten keramischen Werkstoffs mit Porosität, **dadurch gekennzeichnet, dass** dieses Verfahren die folgenden Schritt umfasst:
- Mischen - in wässriger Suspension - von keramischen Pulvern, einem Hydroxid eines hochschmelzenden Metalls wie Aluminium-, Magnesium- oder Zirkoniumhydroxid und einem Dispergiermittel;
- Zusetzen eines körnigen organischen Mittels als Porogen;
- Zusetzen eines Schaumbildners;
- mechanisches Rühren des Gemisches mit den obengenannten Bestandteilen, um einen keramischen Schaum zu erhalten;
- Stabilisieren des so erhaltenen keramischen Schaums durch Zusatz eines Stabilisators;
- Gießen des stabilisierten keramischen Schaums in eine Form;
- Trocknen dieses stabilisierten keramischen Schaums im Trockenofen, um wenigstens einen Teil des vorhandenen Wassers zu entfernen; und
- Unterziehen dieses Schaums einer Hochtemperaturbehandlung.

2. Verfahren nach Anspruch 1, **dadurch gekennzeichnet, dass** keramische Pulver verwendet werden, die mehrere verschiedene Korngrößenfraktionen umfassen.

3. Verfahren nach einem der Ansprüche 1 oder 2, **dadurch gekennzeichnet, dass** keramische Pulver verwendet werden, die Fraktionen mit einer unterschiedlichen Korngröße in einem Verhältnis zwischen der gröbsten Fraktion und der feinsten Fraktion zwischen 0,2 und 0,5 umfassen.

4. Verfahren nach irgendeinem der Ansprüche 1 bis 3, **dadurch gekennzeichnet, dass** keramische Pulver verwendet werden, die wenigstens eine der folgenden Verbindungen enthalten: Schamotte, Sillimanit, Kaolin, Andalusit, Mullit, Kieselsäure oder Tonerde.

5. Verfahren nach irgendeinem der Ansprüche 1 bis 3, **dadurch gekennzeichnet, dass** keramische Pulver verwendet werden, die im Wesentlichen aus Tonerde bestehen.

6. Verfahren nach Anspruch 5, **dadurch gekennzeichnet, dass** die obengenannte Tonerde in zwei Formen verwendet wird, von denen eine erste Form eine monomodale Verteilung aufweist, die von 0,1 bis 4 µm reicht, mit einer mittleren Korngröße von 0,4 µm, und von denen eine zweite Form aus einer kalzinierten Tonerde mit einer bimodalen Korngrößenverteilung besteht, die von 0,2 bis 40 µm reicht, mit einer mittleren Korngröße von etwa 2,57 µm.

7. Verfahren nach irgendeinem der Ansprüche 1 bis 6, **dadurch gekennzeichnet, dass** das Aluminiumhydroxid überwiegend in amorpher Form verwendet wird, insbesondere Aluminiumhydroxid, das zu 50 bis 60 Gew.-% eine amorphe Phase und zu 40 bis 50 Gew.-% kristallisierte Phasen enthält, wobei diese letzteren 10 bis 20 Gew.-% Bayerit und 25 bis 35 Gew.-% Böhmit umfassen.

8. Verfahren nach irgendeinem der Ansprüche 1 bis 7, **dadurch gekennzeichnet, dass** ein körniges organisches Mittel verwendet wird, das eine Stärke, insbesondere eine native oder chemisch modifizierte Stärke, umfasst.

9. Verfahren nach Anspruch 8, **dadurch gekennzeichnet, dass** Stärke verwendet wird, die Partikel mit einer mittleren Größe von etwa 12 µm aufweist.

10. Verfahren nach irgendeinem der Ansprüche 1 bis 9, **dadurch gekennzeichnet, dass** das körnige organische Mittel, insbesondere Stärke, der wässrigen Suspension bei Umgebungstemperatur zugesetzt wird.

11. Verfahren nach irgendeinem der Ansprüche 1 bis 10, **dadurch gekennzeichnet, dass** ein der Suspension zuzusetzender Schaumbildner verwendet wird, der unter den grenzflächenaktiven Stoffen wie Natriumlaurylsulfat, insbesondere Ammonium- und Dodecylsulfat, und Zerfallsprodukten und Proteinen oder Derivaten wie Albumin ausgewählt ist.

12. Verfahren nach irgendeinem der Ansprüche 1 bis 11, **dadurch gekennzeichnet, dass** der keramische Schaum durch Belüftung der wässrigen Suspension mittels eines grenzflächenaktiven Stoffs gebildet wird und dass die Stabilisierung des Schaums durch Zusatz eines Polyelektrolyten gewährleistet wird.

13. Verfahren nach irgendeinem der Ansprüche 1 bis 12, **dadurch gekennzeichnet, dass** der keramische Schaum mit einem chemischen oder hydraulischen mineralischen Bindemittel versetzt wird.

14. Verfahren nach irgendeinem der Ansprüche 1 bis 13, **dadurch gekennzeichnet, dass** keramische Pulver verwendet werden, die ein Pulver aus amorpher Kieselsäure umfassen, das vorzugsweise eine Fraktion von metallischem Silizium enthält.

15. Verfahren nach Anspruch 14, **dadurch gekennzeichnet, dass** das Pulver aus amorpher Kieselsäure in zwei Formen verwendet wird, von denen eine erste Form Partikel von 0,1 bis 0,8 µm mit einer mittleren Größe von etwa 0,3 µm aufweist und von denen eine zweite Form Partikel von 3 bis 100 µm mit einer mittleren Größe von etwa 30 µm aufweist.

16. Verfahren nach Anspruch 14 oder 15, **dadurch gekennzeichnet, dass** der keramische Schaum durch Reaktion zwischen der Fraktion von metallischem Silizium und in der wässrigen Suspension vorhandenen Alkalien gebildet wird, wobei dieses metallische Silizium folglich einen Schaumbildner bildet.

17. Verfahren nach irgendeinem der Ansprüche 1 bis 16, **dadurch gekennzeichnet, dass** der keramische Schaum einer Temperatur zwischen 30 und 60°C und vorzugsweise einer Temperatur von etwa 50°C ausgesetzt wird, um eine Aushärtung dieses Schaums durch die bindende Wirkung einer amorphen Aluminiumhydroxidphase herbeizuführen.

18. Verfahren nach einem der Ansprüche 8 oder 9, **dadurch gekennzeichnet, dass** die Temperatur der Ofentrocknung je nach dem Trocknen des keramischen Schaums allmählich erhöht wird, um die Gelierung der Stärke zu verhindern und die Integrität der Stärkepartikel zu erhalten.

19. Verfahren zur Herstellung eines keramischen Werkstoffs mit multimodaler Porosität, nach Anspruch 1, bei dem eine wässrige Suspension hergestellt wird, welche enthält:
- 40 bis 60 Gew.-% keramisches Pulver;
- 2 bis 10 Gew.-% Aluminiumhydroxid;
- 7 bis 24 Gew.-% Stärke, vorzugsweise etwa 19%;
- 1,5 bis 4 Gew.-% Schaumbildner, vorzugsweise etwa 3%;
- 25 bis 35 Gew.-% demineralisiertes Wasser, das in einem Verhältnis von etwa 1:100 ein Dispergiermittel enthält;
diese wässrige Suspension einem mechanischen Rühren unterzogen wird, um einen keramischen Schaum zu erhalten, dieser Schaum einer Ofentrocknung bei einer Temperatur zwischen 50°C und 110°C unterzogen wird und anschließend dieser Schaum einer hohen Temperatur, vorzugsweise zwischen 1500°C und 1600°C, ausgesetzt wird.

20. Verfahren zur Herstellung eines keramischen Werkstoffs mit einer multimodalen Porosität von 70% bis 90%, nach Anspruch 1, bei dem eine wässrige Suspension hergestellt wird, welche enthält:
- 40 bis 60 Gew.-% keramisches Pulver;
- 2 bis 10 Gew.-% Aluminiumhydroxid;
- 7 bis 24 Gew.-% Stärke, vorzugsweise 19%;
- 1,5 bis 4 Gew.-% Schaumbildner, vorzugsweise 3%;
- 0,1 bis 0,4 Gew.-% Stabilisator, vorzugsweise 0,2%;
- 30 bis 40 Gew.-% demineralisiertes Wasser;
- 0,03 bis 0,15 Gew.-% Natriumcarbonat;
- 0,1 bis 0,2 Gew.-% Natriumsilicat;
und bei dem diese wässrige Suspension einem mechanischen Rühren unterzogen wird, um einen keramischen Schaum zu erhalten, dieser Schaum einer Ofentrocknung bei einer Temperatur zwischen 50°C und 110°C unterzogen wird und anschließend dieser Schaum einer hohen Temperatur, vorzugsweise zwischen 1500°C und 1600°C, ausgesetzt wird.

21. Verfahren zur Herstellung eines porösen keramischen Werkstoffs, nach Anspruch 1, bei dem eine wässrige Suspension hergestellt wird, welche enthält:
- 38 bis 52 Gew.-% Tonerdepulver;
- 5 bis 10 Gew.-% Kieselsäurepulver;
- 2 bis 10 Gew.-% Aluminiumhydroxid;
- 7 bis 24 Gew.-% Stärke, vorzugsweise 19%;
- 1,5 bis 4 Gew.-% Schaumbildner, vorzugsweise 3%;
- 0,1 bis 0,4 Gew.-% Stabilisator, vorzugsweise 0,2%;
- 25 bis 35 Gew.-% demineralisiertes Wasser, das in einem Verhältnis von etwa 1:100 ein Dispergiermittel enthält;
und bei dem diese wässrige Suspension einem mechanischen Rühren unterzogen wird, um einen keramischen Schaum zu erhalten, dieser Schaum einer Ofentrocknung bei einer Temperatur zwischen 50°C und 110°C unterzogen wird und anschließend dieser Schaum einer hohen Temperatur, vorzugsweise zwischen 1500°C und 1600°C, ausgesetzt wird.
